# EUROPÄISCHE PATENTSCHRIFT

(11) **EP 1 462 043 B1**
(45) Veröffentlichungstag und Bekanntmachung des Hinweises auf die Patenterteilung: **01.03.2006**
(21) Anmeldenummer: 03006724.3
(22) Anmeldetag: 24.03.2003
(51) Int. Cl.: A47J 31/54

(54) **Verfahren zum Steuern einer Getränkezubereitungsmaschine**
Method for controlling a machine for making beverages
Procédé de commande d' une machine à préparer des boissons

(43) Veröffentlichungstag der Anmeldung: 29.09.2004
(73) Patentinhaber: WMF WÜRTTEMBERGISCHE METALLWARENFABRIK AG, 73309 Geislingen/Steige (DE)
(72) Erfinder: Fuchs, Leonhard, 89558 Treffelhausen (DE)
(74) Vertreter: Grünecker, Kinkeldey, Stockmair & Schwanhäusser Anwaltssozietät

(56) Entgegenhaltungen:
- EP-A- 0 361 073
- US-A- 6 155 158

## Beschreibung

Die Erfindung bezieht sich auf ein Verfahren zum Steuern einer Getränkebereitungsmaschine, wie aus dem Dokument US 6 155 158 bekannt.

Bei mit Heißwasser arbeitenden Getränkebereitungsmaschinen, wie insbesondere Kaffeemaschine mit ihren Möglichkeiten, die unterschiedlichsten Getränkearten jeweils auf Anforderung durch den Benutzer automatisch bzw. weitgehend automatisch jeweils frisch zuzubereiten, muss sichergestellt werden, dass das einem Heißwasserbereiter dieser Maschine entnommene Heißwasser immer die erforderlichen Temperatur aufweist, unabhängig davon, wieviel oder wie oft Heißwasser entnommen wird. Je nach dem Typ des Heißwasserbereiters, hat man deshalb die Entnahme von Heißwasser generell gesperrt, sobald festgestellt wurde, dass beispielsweise der Wasserspiegel in einem Dampfkessel unter die untere Füllstandselektrode abgesunken ist, unabhängig von der Tatsache, dass das im Dampfkessel verbliebene Heißwasser vielleicht nicht mehr für eine große Menge Heißgetränk gereicht hätte, aber eine kleine Menge durchaus noch hätte entnommen werden können. Dieses Vorgehen ist unwirtschaftlich und führt beim Benutzer zu ärgerlichen Wartezeiten.

Der Erfindung liegt die Aufgabe zugrunde, ein Verfahren bereitzustellen, mit der die zur Verfügung stehende Menge an Heißwasser ökonomischer verwendet werden kann.

Die Aufgabe wird durch die im Anspruch 1 angegebenen Merkmale gelöst.

Durch die erfindungsgemäße Ausgestaltung wird eine dynamische Entnahmesteuerung verwirklicht, mit der sichergestellt wird, dass das zur Verfügung stehende, vollständig aufgeheizte Heißwasser "bis zum letzten Tropfen" zum Aufbrühen verwendet werden kann; ein vorzeitiges Sperren der Heißwasserausgabe somit wesentlich seltener notwendig ist.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: ein erstes Ausführungsbeispiel einer Getränkebereitungsmaschine in schematischer Darstellung zum Durchführen des erfindungsgemäßen Verfahrens,
- Fig. 2: ein zweites Ausführungsbeispiel einer Gertränkebereitungsmaschine in schematischer Darstellung zum Durchführen des erfindungsgemäßen Verfahrens, und
- Fig.3: eine schematische Darstellung eines Leistungs-Zeit-Verlaufs bei der Durchführung des erfindungsgemäßen Verfahrens.

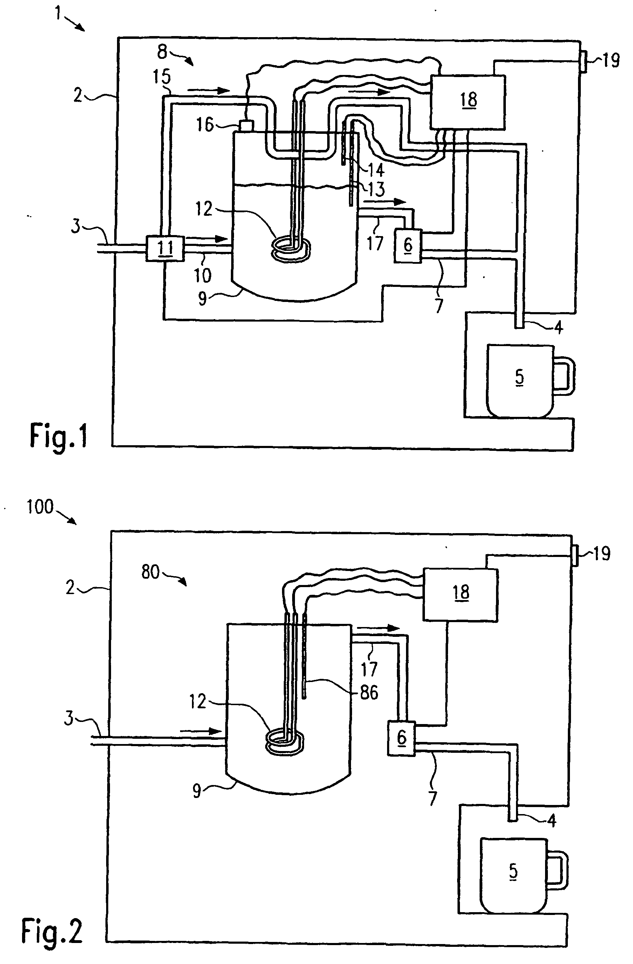

Fig. 1 zeigt ein erstes Ausführungsbeispiel einer Getränkebereitungsmaschine 1, die im vorliegenden Fall als Kaffeemaschine ausgebildet ist, die, wie dies bei automatisch oder weitgehend automatisch arbeitenden, modemen Kaffeemaschinen üblich ist, eine Vielzahl von Getränken, wie beispielsweise Normalkaffee, Espresso, Tee, Dampfstoß zum Aufschäumen usw. in verschieden großen Mengen (Kännchen, Tasse, Tässchen, Glas usw.) zubereiten und ausgeben kann. Die Kaffeemaschine 1 enthält ein Gehäuse 2, in das ein Wasseranschluss 3 hinein- und ein Getränkeauslass 4 herausführt. Im dargestellten Ausführungsbeispiel ist nur ein Getränkeauslass 4 gezeigt, es könnten jedoch mehrere Auslässe jeweils für verschiedene Getränke vorgesehen werden. Unter den Auslass 4 sind die üblichen Trink- bzw. Serviergefäße, dargestellt ist eine Tasse 5, unterzustellen.

In und am Gehäuse 2 sind die üblichen Bestandteile einer Kaffeemaschine angeordnet, wobei aus Gründen der Übersichtlichkeit nur eine Brüheinrichtung 6 schematisch dargestellt ist, die über eine Leitung 7 mit dem Auslauf 4 in Verbindung steht.

Im Gehäuse 2 ist weiterhin ein Heißwasserbereiter 8 vorgesehen, der im dargestellten Ausführungsbeispiel als Dampfkessel üblicher Konstruktion ausgebildet. Der Dampfkessel 8 enthält den üblichen Kessel 9, der über eine Leitung 10 und ein Zulaufventil 11 mit dem Kaltwassereinlass 3 in Verbindung steht. Im Inneren des Kessels ist eine Heizung 12 vorgesehen. Der Füllstand im Kessel wird über eine Niedrigwasserelektrode 13 und eine Betriebswasserelektrode 14 überwacht, wobei der Füllstand zwischen den beiden Elektroden 13 und 14 pendeln kann. Im Kessel 9 ist weiterhin einer der üblichen Durchtauferhitzer 15 in Form einer durch den Kessel laufenden Rohrschlange vorgesehen, der der Dampfbereitung dient. Schließlich ist am Kessel ein Drucksensor 16 vorgesehen, der den Betriebsdruck im Inneren des Kessels 9 überwacht.

Eine Heißwasserleitung 17 verbindet den Dampfkessel 8 mit der Brüheinrichtung 6.

Das Zulaufventil 11, die Heizung 12, die Niveauelektroden 13 und 14 sowie der Drucksensor 16 und die Brüheinrichtung 6 sind mit einer Steuerung 18 verbunden. Ebenfalls mit der Steuerung 18 verbunden sind Betätigungselemente 19 an der Außenseite des Gehäuses, mit denen ein Benutzer das gewünschte Getränk in der gewünschten Menge vorwählen kann, wobei ein Zubereitungszyklus für dieses Getränk in Gang gesetzt wird.

Bei Dampfkesseln kann üblicherweise nur so viel Kaltwasser zugespeist werden, wie gleichzeitig auf Soll-Temperatur (gewöhnlich 120°C) aufgeheizt werden kann. Der Dampfdruck und somit die Temperatur muss konstant bleiben. Auf diese Erfordernisse, in Abhängigkeit von anderen Parametem, wie beispielsweise der Größe des Kessels 9 und der Vorlauftemperatur des Wassers, ist die Kesselkapazität oder Leistungsfähigkeit des Dampfkessels 8 durch Positionierung der oberen und unteren Füllstandselektroden 13 und 14 abgestimmt. Hat der Dampfkessel 8 seinen maximalen Füllstand und seinen Solldruck erreicht, so besitzt er eine Kapazität oder Leistungsbereitschaft von 100 %.

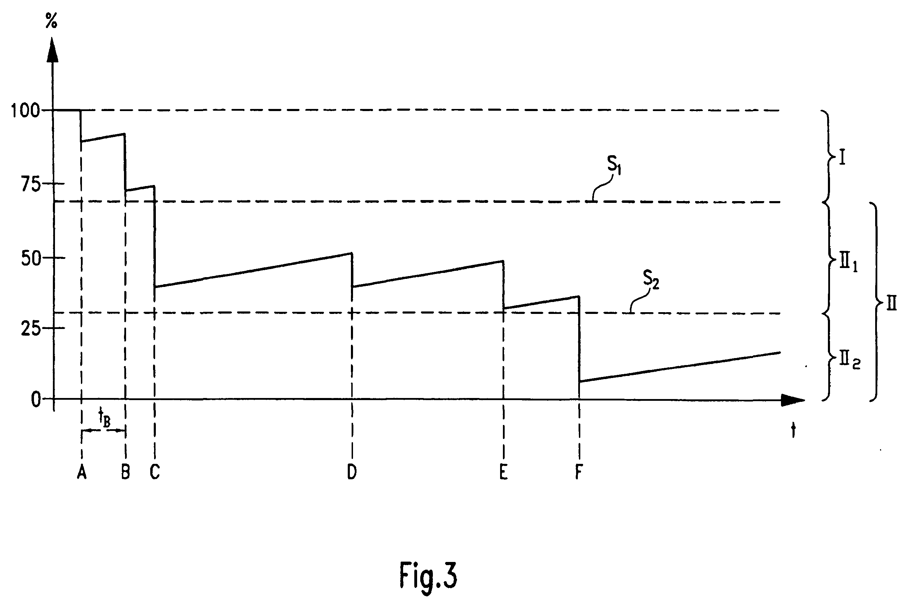

Die zum Zubereiten der einzelnen Getränkeeinheiten notwendigen Entnahmemengen an Wärmeenergie in Form von Heißwasser sind ebenfalls bekannt und werden zum Berechnen einer Kennziffer für jede Getränkeeinheit verwendet und in der Steuerung 18 gespeichert. Als "Getränkeeinheit" wird jedes in einem Zubereitungs- und Ausgabezyklus ausgegebene Getränke definiert, also z.B. ein Tässchen Espresso, ein Glas Tee, eine Kanne Kaffee, ein Dampfstoß usw. In der Steuerung 18 werden weiterhin die Art und die Anzahl der über die Betätigungselemente 19 vorgewählten Getränkeeinheiten gespeichert und zum erfindungsgemäßen Betreiben der Getränkebereitungsmaschine 1 verwendet, wie dies in Fig. 3 dargestellt ist.

In Fig. 3, angewandt auf den Dampfkessel 8 der Fig. 1, bedeutet 100 % Kapazität oder Leistungsvermögen einen bis zur oberen Niveauelektrode 14 gefüllten, auf Soll-Temperatur und Soll-Druck gebrachten Dampfkessel 8. Null % Kapazität bzw. Leistungsvermögen bedeutet ein auf das Niveau der unteren Niveauelektrode 13 abgesunkener Wasserspiegel im Kessel 9 oder ein Soll-Druck bzw. eine Soll-Temperatur außerhalb des üblichen Toleranzbereichs. Die Kapazität wird über das Niveau und über den Druck oder wahlweise die Temperatur überwacht.

Zur Durchführung des erfindungsgemäßen Verfahrens wird der Leistungsbereich zwischen Null und 100 % durch Schwellenwerte in einzelne Bereiche unterteilt. Zwischen einer Kapazität von 100 % und einer Kapazität von etwa 70 % (erster Schwellenwert S₁) wird ein Vollleistungsbereich I definiert, in dem Ausgabevorgänge unbegrenzt möglich sind. Unterhalb des Schwellwertes S₁ bis zur Kapazität Null % wird ein zweiter Leistungsbereich, ein Teilleistungsbereich II definiert, der im dargestellten Ausführungsbeispiel durch einen zweiten Schwellenwert S₂ in Teilleistungsbereiche II₁ und II₂ unterteilt wird, wobei der erste Teilleistungsbereich II₁ zwischen etwa 70 und etwa 30 % Kapazität und der zweiter Teilleistungsbereich II₂ zwischen etwa 30 und Null % Kapazität definiert ist. Unterhalb von Null % Kapazität erstreckt sich ein Nullleistungsbereich, in dem keine Ausgabe möglich ist.

Wählt ein Benutzer eine bestimmte Getränkeeinheit, so wird die dafür zu entnehmende Wärmeenergie gespeichert und mit dem Leistungsstatus, d.h. der zu diesem Zeitpunkt vorhandenen Kapazität des Dampfkessels 8 verglichen. Innerhalb des Vollleistungsbereichs I besteht keine Einschränkung, d.h. es können beliebige Getränkeeinheiten gezapft werden. In Fig. 3 ist ein erster Zapfvorgang A und nach Ablauf einer Zeitdauer t_{B} ein zweiter Zapfvorgang B vorgenommen worden. Nach dem ersten Zapfvorgang A wurde die Heizung 12 angeschaltet, was zu einer Kapazitätserhöhung, gekennzeichnet durch den Anstieg der Kurve zwischen A und B, führte. Durch den Entnahmevorgang B wurde eine größere Menge Heißwasser entnommen, was einem gegenüber dem Entnahmevorgang A größeren Abfall der Kapazität bzw. Leistungsbereitschaft führt. Die Steuerung summiert die entnommene Kapazität bzw. Wärmemenge für jeden Entnahmevorgang (in Form der Kennziffern) und erstellt einen Leistungsstatus, d.h. sie stellt den Abstand der Kapazität zum Schwellenwert S₁ fest. Kurz nach dem Entnahmevorgang B wird ein dritter Entnahmevorgang C eingeleitet, durch den eine große Menge Heißwasser entnommen wurde. Die Kapazität fällt in den Teilleistungsbereich II, d.h. in den oberen Teilleistungsbereich II₁. In diesem Bereich wird die parallele Entnahme beschränkt auf eine vorbestimmte Wärmemenge, so dass beispielsweise nur noch zwei Produkte mit einem geringeren Heißwasserbedart und/oder nur noch auf ein Produkt mit einem höheren Heißwasserbedarf entnommen werden kann, wobei wiederum nach jeder Entnahme nachgeheizt wird. Sind auch diese Entnahmevorgänge D und E eingeleitet und ausgeführt, und der zeitliche Abstand zwischen den Entnahmevorgängen nicht so groß, dass der Dampfkessel wieder in den Vollleistungsbereich II gelangt, so gelangt der Dampfkessel bei einem weiteren Entnahmevorgang F in den unteren Teilleistungsbereich II₂, in dem beispielsweise nur noch die Ausgabe einer Getränkeeinheit möglich ist. Erst dann wird die Ausgabe für alle Getränkeeinheiten gesperrt, bis der Dampfkessel 8 wieder seine volle Leistungskapazität erreicht hat.

Das erfindungsgemäße Verfahren ist in gleiche Weise auf andere Getränkebereitungsmaschinen mit anderen Heißwassererzeugem anwendbar. So zeigt Fig. 2 eine Getränkebereitungsmaschine 100, die wiederum in Form einer Kaffeemaschine für automatischen oder halbautomatischen Betrieb ausgebildet ist, wobei gleiche oder vergleichbare Bauteile mit den gleichen Bezugszeichen wie in Fig. 1 gekennzeichnet und nicht nochmals erläutert sind. Die Getränkebereitungsmaschine 100 enthält einen Heißwasserbereiter in Form eines Boilers 80 mit einem Kessel 9, in dem eine Heizung 12 und ein Temperaturfühler 86 untergebracht sind. Die Heißwasserleitung 17 führt hier aus dem oberen Bereich des Kessels 9 in die Brüheinrichtung 6. Ein Boiler ist immer gefüllt; und es wird so viel Kaltwasser nachgezogen, wie Heißwasser entnommen wurde. Die Temperaturschichtung im Boiler erlaubt trotzdem die Entnahme von Wasser auf Soll-Temperatur (typisch 96°C). Die Soll-Temperatur wird über den Temperaturfühler 86 im mittleren Bereich des Boilers geregelt. Die Kapazität des Boilers, für die Zwecke der Fig. 3, entspricht 100 %, wenn die mittlere Temperatur des Boilers 80 in Beharrung ist, d.h. z.B. am Ende eines Heizzyklus. Null % Kapazität entspricht einer Temperatur des Boilers am unteren Grenzwert des Toleranzbereiches für die Temperatur.

Die Durchführung des erfindungsgemäßen Entnahmevorgangs gemäß Fig. 3 ist für die Getränkebereitungsmaschine 100 die gleiche wie für die Getränkebereitungsmaschine 1, lediglich mit dem Unterschied, dass hier die Kapazität über die Temperatur überwacht wird.

In Abwandlung der beschriebenen und gezeichneten Ausführungsbeispiele kann das erfindungsgemäße Verfahren auf jede Art Heißwasserbereiter angewandt werden. Es ist weiterhin möglich, mehr als zwei Teilleistungsbereiche oder lediglich einen Teilleistungsbereich vorzusehen.

## Patentansprüche

1. Verfahren zum Steuern einer Getränkebereitungsmaschine (1) zum Zubereiten einer Mehrzahl unterschiedlicher Getränkeeinheiten auf Heißwasserbasis, wobei das Heißwasser für die Mehrzahl der Getränkeeinheiten der gleichen Heißwasserquelle (8) entnommen wird, und wobei der Leistungsstatus der Heißwasserquelle (8) überwacht und die Heißwasserentnahme so gesteuert wird, dass die Heißwasserentnahme bei einem vorbestimmten Vollleistungsstatus (I) für alle Getränkeeinheiten freigegeben, bei einem vorbestimmten Nullleistungsstatus für alle Getränkeeinheiten gesperrt und bei einem vorbestimmten Teilleistungsstatus (II) für bestimmte Getränkeeinheiten gesperrt und für andere vorbestimmte Getränkeeinheiten freigegeben wird.

2. Verfahren nach Anspruch 1, **dadurch gekennzeichnet, dass** jeder Leistungsstatus durch einen Schwellenwert (S) begrenzt ist, bei dessen Unterschreitung die Entnahme vorbestimmter Getränkeeinheiten gesperrt ist.

3. Verfahre nach Anspruch 1 oder 2, **dadurch gekennzeichnet, dass** der Vollleistungsstatus (I) als Leistungsbereich ausgebildet ist.

4. Verfahren nach einem der Ansprüche 1 bis 3, **dadurch gekennzeichnet, dass** der Teilleistungsstatus (II) wenigstens einen Leistungsbereich (II₁, II₂) umfasst.

5. Verfahren nach einem der Ansprüche 1 bis 4, **dadurch gekennzeichnet, dass** für jede Getränkeeinheit ein Leistungsentnahmewert festgestellt wird, der bei jeder Entnahme vom aktuellen Leistungsstatus abgezogen wird.

6. Verfahren nach einem der Ansprüche 1 bis 5, **dadurch gekennzeichnet, dass** das Heißwasser synchron zur Entnahme aufgeheizt wird.

## Claims

1. Method for controlling a drink preparation machine (1) for preparing a multiple number of different drink units on a hot-water basis, whereby the hot water for the multiple number of drink units is withdrawn from the same hot water source (8) and whereby the performance status of the hot water source (8) is monitored and the hot water withdrawal is controlled in such a way that the hot water withdrawal is released for all drink units at a predetermined full performance status (I), is blocked for all drink units at a predetermined zero performance status and, at a predetermined partial performance status (II), is blocked for certain drink units and released for other predetermined drink units.

2. Method according to Claim 1, **characterised in that** each performance status is limited by a threshold value (S), whereby the withdrawal of predetermined drink units is being blocked if this threshold value is fallen below.

3. Method according to Claim 1 or 2, **characterised in that** the full performance status (I) is formed as a performance range.

4. Method according to one of the Claims 1 to 3, **characterised in that** the partial performance status (II) comprises at least one performance range (II₁, II₂).

5. Method according to one of the Claims 1 to 4, **characterised in that** a performance withdrawal value is established for each drink unit, and that this performance withdrawal value is deducted from the current performance status with each withdrawal.

6. Method according to one of the Claims 1 to 5, **characterised in that** the hot water is heated up synchronously with the withdrawal.

## Revendications

1. Procédé de commande d'une machine à préparer des boissons (1) pour la préparation d'une pluralité d'unités de boisson différentes à base d'eau chaude, dans lequel l'eau chaude pour la pluralité d'unités de boisson est prélevée à partir d'une même source d'eau chaude (8), et dans lequel l'état de capacité de la source d'eau chaude (8) est contrôlé et le prélèvement d'eau chaude est commandé de telle manière qu'à un état de pleine capacité (I) prédéterminé, le prélèvement d'eau chaude est autorisé pour toutes les unités de boisson, à un état de capacité nulle prédéterminé, le prélèvement d'eau chaude est bloqué pour toutes les unités de boisson et à un état de capacité partielle (II) prédéterminé, le prélèvement d'eau chaude est autorisé pour certaines unités de boisson et bloqué pour d'autres unités de boisson prédéterminées.

2. Procédé selon la revendication 1, **caractérisé en ce que** chaque état de capacité est limité par une valeur seuil (S) dont le sous-dépassement bloque le prélèvement d'unités de boisson prédéterminées.

3. Procédé selon la revendication 1 ou 2, **caractérisé en ce que** l'état de pleine capacité (I) est réalisé en tant que gamme de capacités.

4. Procédé selon l'une quelconque des revendications 1 à 3, **caractérisé en ce que** l'état de capacité partielle (II) comprend au moins une gamme de capacités (II₁, II₂).

5. Procédé selon l'une quelconque des revendications 1 à 4, **caractérisé en ce qu'**une valeur de prélèvement selon la capacité est définie pour chaque unité de boisson, laquelle valeur est soustraite de l'état de capacité actuel à chaque prélèvement.

6. Procédé selon l'une quelconque des revendications 1 à 5, **caractérisé en ce que** l'eau chaude est chauffée de manière synchrone avec le prélèvement.
